# EUROPÄISCHE PATENTSCHRIFT

(11) **EP 1 219 795 B1**
(45) Veröffentlichungstag und Bekanntmachung des Hinweises auf die Patenterteilung: **09.11.2005**
(21) Anmeldenummer: 01130514.1
(22) Anmeldetag: 21.12.2001
(51) Int. Cl.: F01N 3/20, F01N 3/08

(54) **Verfahren und Konverter zur katalystischen Umwandlung von Kraftstoff**
Method and converter for catalytic conversion of fuel
Procédé et convertisseur pour la conversion catalytique de combustible

(30) Priorität: 28.12.2000 DE 10065473
(43) Veröffentlichungstag der Anmeldung: 03.07.2002
(73) Patentinhaber: BASF Aktiengesellschaft, 67056 Ludwigshafen (DE)
(72) Erfinder: Bender, Michael, Dr., 67063 Ludwigshafen (DE); Unverricht, Signe, Dr., 68169 Mannheim (DE)
(74) Vertreter: Isenbruck, Günter

(56) Entgegenhaltungen:
- DE-A- 19 855 385
- GB-A- 659 786
- GB-A- 790 559
- US-A- 3 086 026
- PATENT ABSTRACTS OF JAPAN vol. 1999, no. 14, 22. Dezember 1999 (1999-12-22) & JP 11 244663 A (TOYOTA CENTRAL RES &DEV LAB INC), 14. September 1999 (1999-09-14)

## Beschreibung

Die Erfindung betrifft ein Verfahren zur katalytischen Umwandlung von Kraftstoff, ein Verfahren zur Entfernung von Stickoxiden aus Abgasen von Verbrennungskraftmaschinen und einen dafür geeigneten Konverter.

Die technische Entwicklung direkteingespritzter, mager betriebener Otto- und Dieselmotoren hat in den letzten Jahren zu einer Senkung des Kraftstoffverbrauchs geführt. Durch diesen Trend kann die CO₂-Emission aus mobilen Quellen in Zukunft ohne Leistungseinbuße nachhaltig gesenkt werden, und Erdölressourcen können geschont werden. Nachteil der Magerfahrweise von Verbrennungsmotoren ist jedoch die Bildung von Stickoxiden (NOₓ) durch den hohen Sauerstoffüberschuß im Brennraum. Typischerweise beträgt die NOₓ-Konzentration im Motorabgas einige hundert ppm. Die zukünftigen europäischen Abgasnormen limitieren die pro gefahrenem Kilometer emittierte Menge an NOₓ auf 0,5 g/km ab 01.01.2001 bzw. auf 0,25 g/km ab 01.01.2005. Der Einsatz direkteingespritzter Magermotoren im Pkw- und Lkw-Verkehr setzt daher eine effiziente Entstickung der Verbrennungsabgase voraus.

Für die Einhaltung der Emissionsgrenzwerte stehen verschiedene Möglichkeiten zur Verfügung:

Zu den motortechnischen Maßnahmen zählt beispielsweise die Abgasrückführung in den Motor (engl. exhaust gas recycling, EGR). Die NOₓ-Emission läßt sich durch diese Maßnahme ohne Einbußen der Motorleistung sehr effizient vermindern, da sie eine Abnahme des Sauerstoff-Gehalts im Verbrennungsraum und damit eine Zurückdrängung der Luftstickstoffverbrennung bewirkt. Nachteil der Abgasrückführung ist die gleichzeitig stattfindende Zunahme der Emission von Rußpartikeln. Dieser als Diesel-Dilemma bezeichnete Sachverhalt führt dazu, daß in der Praxis eine Einhaltung beider Grenzwerte - NOₓ- wie Rußemission - mit Abgasrückführung allein nicht gelingt. Die Wirkung von EGR-Einrichtungen wird durch selektive Rückführung der Stickoxide teilweise verbessert.

Dabei werden die Stickoxide zwischengespeichert und konzentriert in die Zuluft des Motors dosiert. Motortechnische Maßnahmen reichen jedoch nicht aus, um die geforderte Entstickung zu erzielen.

Eine verbesserte Abgasentstickung läßt sich vor allem durch Abgaskatalysatoren erzielen, in deren Aktivmassen die Stickoxide mit einem Reduktionsmittel umgesetzt werden. Selten wirken solche Katalysatorsysteme durch einfache Zersetzung der Stickoxide in Stickstoff. Häufiger wird Kraftstoff (Diesel- oder Otto-Kraftstoff) als Reduktionsmittel eingesetzt. Die dabei verwendeten Aktivmassen basieren in der Regel auf Edelmetallen, die auf einem oxidischen Trägermaterial aufgebracht sind und als Beschichtung in einem druckverlustarmen Formkörper im Abgasstrang des Fahrzeugs angeordnet werden, vergleiche beispielsweise WO 98/40153. In der Praxis kommen in einer solchen Abgasanlage bei Diesel-Fahrzeugen mehrere Katalysatoren zum Einsatz, deren Temperaturbereiche für die Abgasentstickung und die Oxidation unverbrannter Abgaskomponenten jeweils gegeneinander verschoben sind. Durch das verbreiterte Temperaturfenster ergibt sich eine verbesserte Performance der Katalysator-Anordnung über den gesamten Fahrbetrieb (inner- wie außerorts). Dabei ist es vor allem für Dieselfahrzeuge notwendig, einen Katalysator motornah zu montieren, so daß die im Abgas enthaltene Wärme den Katalysator schnell und direkt aufheizen kann und der Katalysator schnell seine aktive Temperatur erreicht.

Auch WO 98/40153 beschreibt ein solches System, bestehend aus zwei Katalysatoren auf der Basis von Edelmetallen. Bei Umsätzen von ≥ 80 % des Kohlenwasserstoffes und ≥ 70 % CO wird ein NOₓ-Abbau von 26 % erzielt. Die Umsetzung im Abgas eines Magermotors bringt jedoch den Nachteil mit sich, daß die Reaktion von NOₓ mit dem als Reduktionsmittel verwendeten Kraftstoff mit dessen Verbrennung im vorliegenden Sauerstoffüberschuß konkurriert. Aus diesem Grunde wird nur ein geringer Teil effektiv für die NOₓ-Minderung verwendet. Der größere Teil des Kraftstoffes geht ungenutzt verloren. Der Nutzungsgrad läßt sich chemisch durch die Selektivität der Entstickungsreaktion ausdrücken. Dabei werden häufig die stöchiometrischen Verhältnisse der Entstickungsreaktion vernachlässigt, so daß die Selektivitätsangaben nicht den Nutzungsgrad des Kohlenwasserstoffes direkt angeben. So beschreibt WO 98/40153 beispielsweise eine NOₓ-Selektivität von 0,3 bis 1,0, was bei Berücksichtigung der Stöchiometrie einer Nutzung des angebotenen Kohlenwasserstoffes Propan für die Entstickungsreaktion von 1,5 bis 5 % entspräche. Der übrige Kohlenwasserstoff wird direkt verbrannt.

Überträgt man diese geringen Nutzungsgrade auf die NOₓ-Reduktion mit Kraftstoff, so ist die theoretisch einzusetzende Kraftstoff-Menge so hoch, daß die zum Erreichen der geforderten EURO IV-Abgasnorm notwendige Kraftstoffdosis den Verbrauchsvorteil des Magermotors überkompensiert. Die Kraftstoffdosis ist jedoch nicht nur ökonomisch sondern auch technisch nicht sinnvoll einsetzbar, da die hohe Verbrennungswärme des Kraftstoffes den Abgas-Katalysator so stark aufheizt, daß Totalverbrennung vorherrscht. In jedem Fall begrenzt die konkurrierende Totalverbrennung des Reduktionsmittels den NOₓ-Abbau, sodaß die EURO-IV-Norm auf diese Weise nicht zu erreichen ist.

Es ist wünschenswert, Stickoxide reduktiv im mageren Abgas zu entfernen. Dabei können organische Substanzen als selektive Reduktionsmittel zur katalytischen Entfernung von Stickoxiden aus dem Abgas von Verbrennungsmotoren verwendet werden. So wird z.B. in EP-A-0 537 942 die NOₓ-Reduktion an hochsaurem γ-Al₂O₃ mit Hilfe organischer Substanzen beschrieben. Die Schrift lehrt, daß Alkane, Alkene, Alkine, Aromaten, Alkohole, Aldehyde, Ketone, Ether und Ester als solche Reduktionsmittel verwendet werden können. Die Schrift beschreibt weiterhin die Zudosierung dieser Substanzen in den Abgasstrom vor dem NOₓ-Reduktionskatalysator über eine Düse. Die Düse "atomisiert", zerteilt also flüssige oder gasförmige Reaktanden physikalisch. Ausführend wird die NOₓ-Reduktion mit Propylen als Reduktionsmittel beschrieben. Dabei werden die NOₓ-Abbauwerte von bis zu 80 % erst bei Temperaturen oberhalb von 500°C erzielt. Dieses Faktum ist nachteilig, da die Temperatur des Abgases insbesondere von Diesel-Motoren mit 100-400°C deutlich unter der in EP-A-0 537 942 beschriebenen NOₓ-Abbautemperatur liegt.

Eine Bereitstellung der Reduktionsmittel kann entweder durch Mitführen in einem separaten Tank oder durch on-board-Erzeugung aus einer Vorläuferstufe erfolgen. Letztere Variante bietet Vorteile, da als Vorläuferstufe der Kraftstoff des Fahrzeugs genutzt werden kann, so daß an Bord des Fahrzeugs aufwendige Infrastruktur für die Mitführung der Vorläuferstufe ebenfalls entfallen kann. So beschreibt JP-A-112 44663 ein Verfahren, bei der das kohlenwasserstoffhaltige Abgas zunächst über einen Partialoxidationskatalysator und danach über den eigentlichen NOₓ-Reduktionskatalysator geleitet wird. Als Partialoxidationskatalysatoren werden Titanoxide beschrieben, die mit verschiedenen Übergangsmetallen dotiert wurden. Für die eigentliche NOₓ-Reduktion werden Edelmetallhaltige Aktivmassen verwendet. Der Nachteil bei diesem Verfahren besteht in der nicht konstanten Temperatur des Partialoxidationskatalysators, da dieser durch die Temperatur des Abgasstromes abwechselnd aufgeheizt oder abgekühlt wird. Die Temperatur des Katalysatorsystems und damit die Entstickungsleistung hängt somit vom Betriebspunkt des Motors ab.

JP-A-100 005 46 beschreibt ein ähnliches Verfahren. Auch hier wird der zur NOₓ-Reduktion eingesetzte Kohlenwasserstoff zuvor partiell oxidiert. Dazu wird mindestens ein Teil des Abgases oder aber ein separater Luftstrom mit Kohlenwasserstoff und einer sauerstoffhaltigen, organischen Substanz gemischt und dieses Gemisch in einer Oxidationseinheit zu Aldehyden oxidiert. Dabei wird die Verweilzeit des Gasstromes im Oxidationsreaktor auf 0,05-1 s eingestellt. Die Aldehyde werden in den Hauptabgasstrom eingeleitet und mit den darin enthaltenen Stickoxiden an einem NOₓ-Reduktionskatalysator umgesetzt. Die Aktivmassen bestehen aus verschiedenen, auf γ-Al₂O₃ geträgerten Übergangsmetallen (Ag, Co, Ni). Nachteilig ist bei diesen Systemen, daß sie erst bei Temperaturen ab 350°C NOₓ-Abbau aufweisen. Durch Verwendung von Pt/Ce als Dotierung kann die NOₓ-Abbautemperatur zwar deutlich gesenkt werden. Die optimale Temperatur für den Betrieb der Oxidationseinheit liegt jedoch mit 500°C weiterhin sehr hoch. Durch die starke Wärmeabstrahlung der Oxidationseinheit werden Motorkomponenten in Mitleidenschaft gezogen, und der autotherme Betrieb dieser Oxidationseinheit ist nicht möglich. Ein derartiger Konverter muß extern beheizt werden.

*DE 44 04 617 A1 betrifft ein Verfahren zur katalytischen Umwandlung von Kraftstoff für die Entfernung von Stiksoxiden aus Abgasen von Verbrennungskraftmaschinen, bei dem Kraftstoff und Zuluft in einem Konverter umgewandelt werden, wobei der Kraftstoff und die Zuluft voneinander getrennt in den Konverter geführt und der Kraftstoff im Konverter verdampft werden. Bei dem Verfahren gemäß DE 44 04 617 A1 kommt es zu einem Aufheizen oder Abkühlen des Partialoxidationskatalysators*.

Aufgabe der vorliegenden Erfindung ist die Bereitstellung eines Verfahrens zur katalytischen Umwandlung von Kraftstoff und zur Entfernung von Stickoxiden aus Abgasen von verbrennungskraftmaschinen, das die Nachteile der bestehenden Verfahren vermeidet.

Die Aufgabe wird erfindungsgemäß gelöst durch ein *Verfahren zur katalytischen Umwandlung von Kraftstoff für die Entfernung von Stickoxiden aus Abgasen von Verbrennungskraftmaschinen, bei dem Kraftstoff und ein Teilstrom des Abgases oder der Zuluft in einem Konverter umgewandelt werden, der Kraftstoff und der Teilstrom des Abgases oder der Zuluft voneinander getrennt in den Konverter geführt werden und der Kraftstoff im Konverter verdampft wird, wobei die Konvertertemperatur konstant ist und zur konstanten Regelung der Konvertertemperatur das Verhältnis aus Gasstrom und dosierter Kraftstoffmenge konstant gehalten wird*.

Der Begriff "Kraftstoff beschreibt alle üblichen Kraftstoffe, wie Otto- und DieselKraftstoffe und andere entsprechende Erdöldestillate. Insbesondere wird hierunter Dieselkraftstoff verstanden.

Der Begriff "Verbrennungskraftmaschine" betrifft allgemein Kraftmaschinen, die durch Verbrennung von Kraftstoff angetrieben werden. Insbesondere handelt es sich um Otto- oder Dieselmotoren, insbesondere um Dieselmotoren, speziell um Magermotoren.

Im Konverter wird der Kraftstoff umgewandelt. Dabei kann es sich bei der Umwandlung um ein Cracken, eine Dehydrierung oder eine Teiloxidation handeln. Bevorzugt wird der Kraftstoff dehydriert oder teiloxidiert, speziell teiloxidiert. Dabei wird der Kraftstoff vorzugsweise zumindest teilweise zu Carbonsäuren und/oder Carbonsäureanhydriden teiloxidiert. Insbesondere wird der Kraftstoff zumindest teilweise zu Maleinsäure und/oder Maleinsäureanhydrid teiloxidiert. Dabei führt die Umsetzung vorzugsweise möglichst weitgehend zu Maleinsäure oder Maleinsäureanhydrid.

Der Konverter-Produktstrom kann jedoch auch Kohlenmonoxid oder Wasserstoff oder ein Gemisch beider Gase enthalten.

Die Aufgabe wird auch erfindungsgemäß gelöst durch ein Verfahren zur Entfernung von Stickoxiden aus Abgasen von Verbrennungskraftmaschinen, wobei zunächst ein wie vorstehend beschriebenes Verfahren zur katalytischen Umwandlung von Kraftstoff durchgeführt wird, der Produktstrom aus dem Konverter mit dem Abgas der Verbrennungskraftmaschine vereinigt und an einem Katalysator zum Abbau der Stickoxide umgesetzt wird.

Dabei wird insbesondere Maleinsäure oder Maleinsäureanhydrid mit den Stickoxiden (NOₓ) umgesetzt, wobei die Stickoxide reduziert werden und das Maleinsäureanhydrid oder die Maleinsäure oxidiert wird.

Die Umsetzung zum Abbau der Stickoxide wird dabei vorzugsweise an einem Katalysator durchgeführt, dessen Aktivmasse die Totaloxidation von Maleinsäureanhydrid nicht fördert. Die Aktivmasse des Katalysators enthält deswegen kein Cr, Mn, Fe, Co, Ni, Ru, Rh, Pd, Ir, Pt, Cu. Damit ist der Katalysator zum Abbau der Stickoxide nicht verbrennungsaktiv, im Unterschied zu den üblicherweise eingesetzten edelmetallhaltigen Katalysatoren.

Der Katalysator zum Abbau der Stickoxide enthält vorzugsweise mindestens ein Oxid eines Metalls der ersten bis vierten Hauptgruppe des Periodensystems der Elemente, insbesondere von Aluminium. Speziell enthält der Katalysator γ-Al₂O₃. Er kann auch aus γ-Al₂O₃ bestehen.

Der Katalysator betreibt dabei keine Totalverbrennung organischer Substanzen im Temperaturfenster 100 bis 600 °C, vorzugsweise 150 bis 500 °C, insbesondere 200 bis 400 °C.

Der Katalysator kann Zinnoxid in einem Gewichtsanteil von 0 bis 70 %, vorzugsweise 0 bis 50 %, insbesondere 0 bis 30 % enthalten (bezogen auf das Gesamtgewicht des Katalysators).

Der Katalysator kann eine monolithische Wabenform, bevorzugt in der Form einer extrudierten und anschließend kalzinierten Aktivmasse aufweisen.

Der nach der Umsetzung am Katalysator zum Abbau der Stickoxide erhaltene Produktstrom kann zusätzlich an einem edelmetallhaltigen Katalysator zur Oxidation von verbleibenden organischen Verbindungen weiter umgesetzt werden.

Im Vergleich zu bekannten Verfahren wird erfindungsgemäß die Umsetzung von Stickoxiden mit Kohlenwasserstoffen in zwei Teilschritte aufgetrennt. Zunächst wird der Kraftstoff (Kohlenwasserstoffe) zu Maleinsäure(anhydrid) oxidiert, in einem folgenden Schritt werden an γ-Al₂O₃ die Stickoxide und Maleinsäure(anhydrid) zu Stickstoff und vorzugsweise Kohlendioxid umgesetzt. Die Bildung von Maleinsäure(anhydrid) kann dabei unter stationären Bedingungen durchgeführt werden, die optimal gewählt werden (Temperatur, Belastung usw.), so daß eine maximale Maleinsäure(anhydrid)-Ausbeute möglich ist. Erst dann wird das Produkt mit dem je nach Betrieb des Motors unterschiedlich zusammengesetzten Abgas vermischt und weiter umgesetzt. Hierdurch ist es möglich, die Entfernung von Stickoxiden, insbesondere in Magermotoren, mit hohen Ausbeuten unaufwendig durchzuführen.

Die Erfindung betrifft auch einen Konverter zur katalytischen Umwandlung von Kraftstoff, mit einem Verdampfungsraum und einem damit verbundenen Umwandlungsraum, wobei der Verdampfungsraum getrennte Zuführungen für Abgas oder Zuluft und Kraftstoff aufweist, der Umwandlungsraum einen Katalysator zur katalytischen Umwandlung von Kraftstoff aufweist und der Verdampfungsraum und der Umwandlungsraum so miteinander verbunden sind, daß ein Wärmetransport vom Umwandlungsraum in den Verdampfungsraum möglich ist.

Der Konverter kann dabei im vorstehend beschriebenen Verfahren verwendet werden.

Die Erfindung wird nachfolgend anhand von bevorzugten Ausführungsformen näher erläutert:

In der beigefügten Zeichnung zeigen die
- Figuren 1 bis 4: den schematischen Aufbau des Verbrennungsmotors mit Abgasbehandlung,
- Figur 5: den schematischen Aufbau des Konverters.

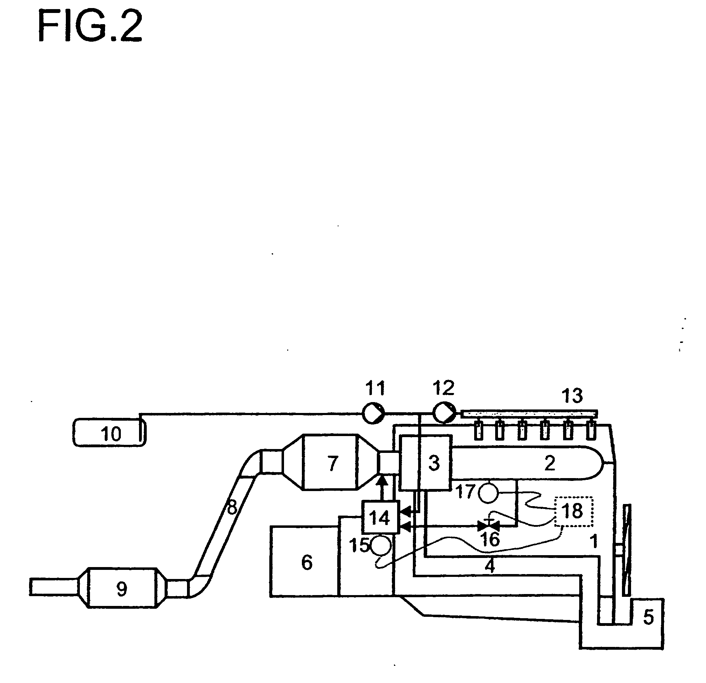

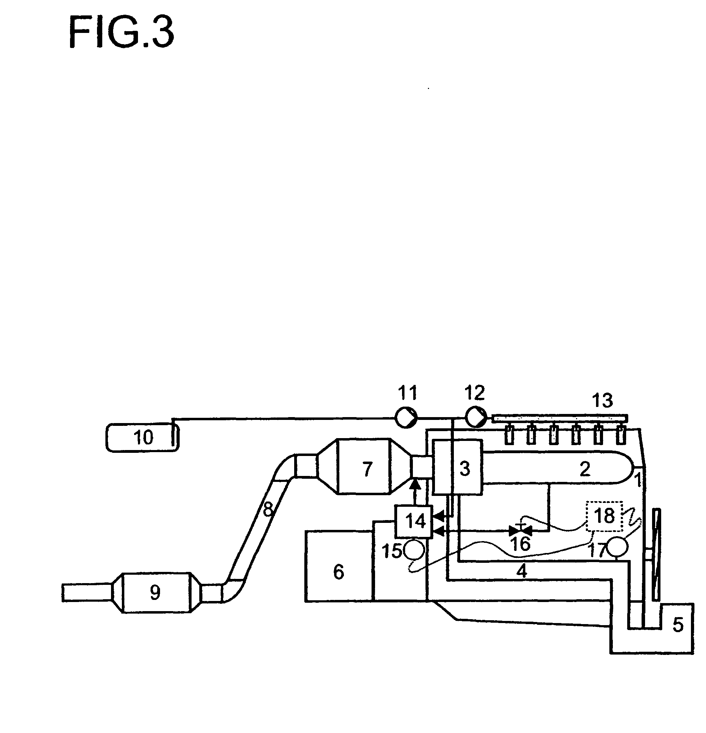

Die Bezugszeichen bedeuten folgendes:
- 1: Diesel-Motorblock
- 2: Abgas-Hochdruckseite (Abgaskrümmer)
- 3: Abgas-Turbolader
- 4: Zuluft-Hochdruckseite (Ansaugkrümmer)
- 5: Ladeluftkühler
- 6: Kupplung und Getriebe
- 7: motornaher Abgaskatalysator (Stirnwand)
- 8: Abgasstrang
- 9: Unterboden-Katalysator
- 10: Kraftstofftank
- 11: Niederdruckeinspritzpumpe
- 12: Hochdruckeinspritzpumpe
- 13: Kraftstoffeinspritzdüsen mit Reservoirleitung
- 14: katalytischer Kraftstoff-Konverter
- 15: Temperaturmeßfühler am Kraftstoff-Konverter
- 16: geregeltes Drosselventil für den Abgas- (Figur 2) bzw. Zuluft-Teilstrom (Figur 3)
- 17: Druckmeßkopf auf der Hochdruckseite des Abgasstromes bzw. Zulufstromes
- 18: motorelektronische Steuerungseinheit
- 19: zweites geregeltes Drosselventil für den Abgas- bzw. Zuluft-Teilstrom
- 20: Zweiter Druckmeßkopf auf der Hochdruckseite des abgasstromes bzw. Zuluftstromes

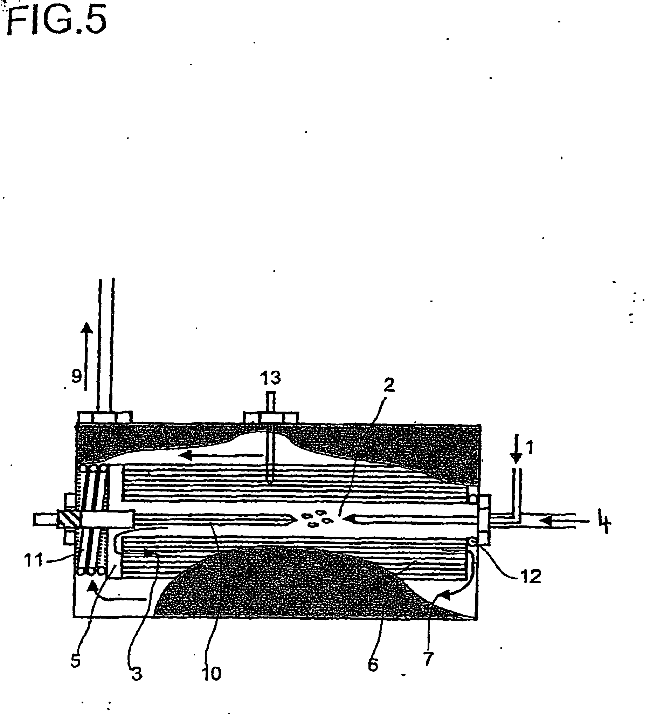

In Figur 5 werden folgende Bezeichnungen verwendet:
- 1: Zufuhr für flüssigen Kraftstoff
- 2: Kraftstoffeinspritzdüse
- 3: Partialoxidationskatalysator
- 4: Teilgasstrom
- 5: Umlenkkappe
- 6: Gasaustritt aus dem Partialoxidationskatalysator
- 7: Zwischenraum zwischen Konvertergehäuse und Partialoxidationskatalysator
- 8: Konvertergehäuse
- 9: Austritt des Produktstromes
- 10: Heizelement, z.B. Glühkerze
- 11: Feder
- 12: Dichtung

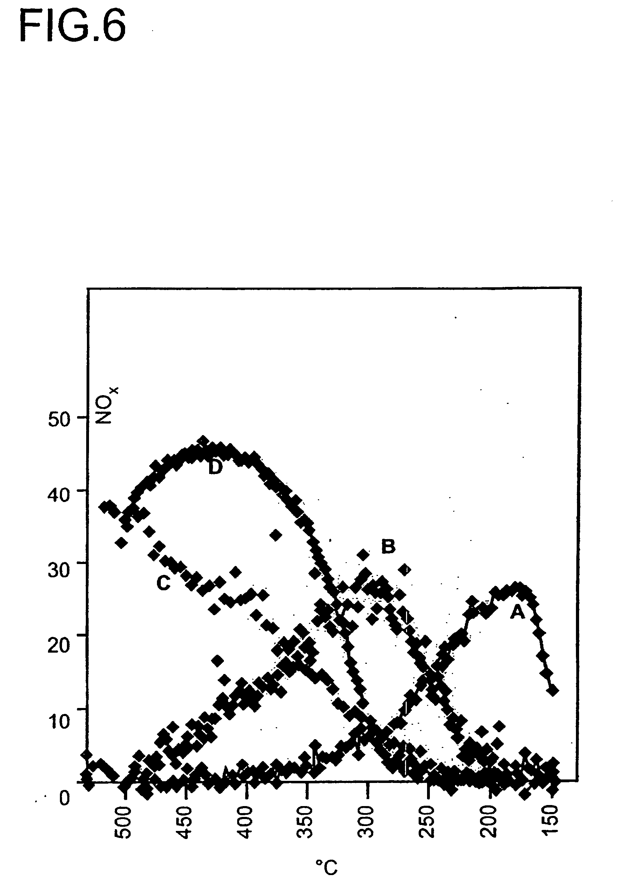

- Figur 6: zeigt eine Auftragung des NOₓ-Abbaus in % gegenüber der Ofentemperatur in °C für vier unterschiedliche Umsetzungen:
A: Diesel an Pt/Al₂O₃
B: Diesel an 20% CuO:γ-Al₂O₃
C: Diesel an γ-Al₂O₃
D: MSA an γ-Al₂O₃

Die Katalysatoren für Partial- und Entstickungsreaktion wurden in einer Laborapparatur getestet. Dazu wurden die Aktivmassen in Splittform (0,7 - 1,0 mm) in einem Reaktor vorgelegt und in einem Ofen extern beheizt. Dazu wurde der Ofen linear zwischen 200°C und 400°C geregelt. Die Gasbelastung betrug 20.000 h⁻¹. Das synthetische Abgas wurde mit einem O₂-Restgehalt von 10% und einem Wassergehalt von 5% vorgemischt.

Die Partialoxidation erfolgte unter Verdampfung des Kraftstoffes an einer extern beheizten Steatit-Kugelschüttung. Die Ausbeute an MSA wurde mit Hilfe eines IR-Spektrometers in der Gasphase bestimmt.

In den Versuchen zur Abgasentstickung wurde der katalytische NOₓ-Abbau in der Abkühlphase der Tests mit Hilfe eines Chemilumineszenz-NOₓ-Detektors bestimmt. Die Partialoxidation von Diesel zu MSA zeigte bei 400°C mit ca. 30% Ausbeute ein Maximum.

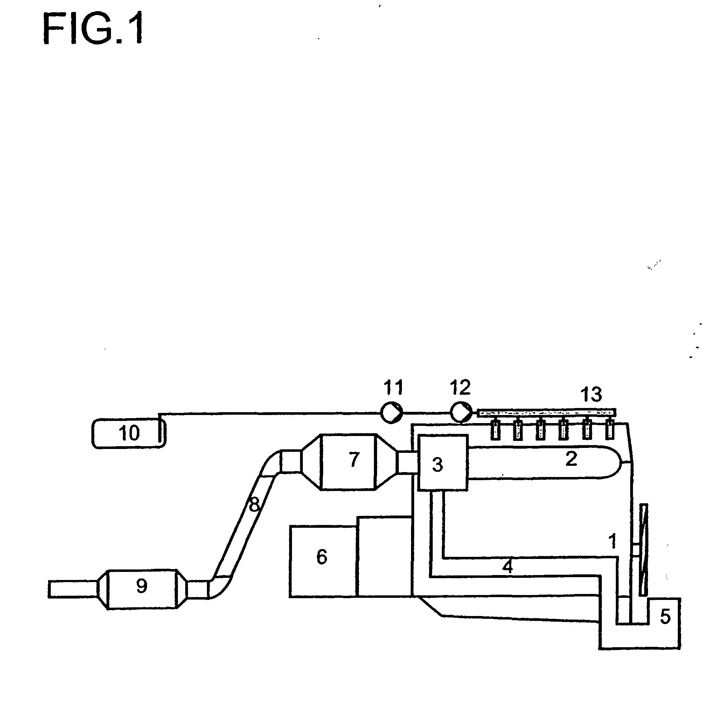

Die vorliegende Erfindung betrifft insbesondere die Verbesserung der Abgasentstickung eines direkteingespritzten (DE)-Dieselmotors (Fig. 1). In diesem modernen Motortyp ist der Motor (1) mit einem durch den Abgasstrom (2) getriebenen Abgasturbolader (3) ausgerüstet, der Frischluft (4) über einen Ladeluftkühler (5) in den Verbrennungsraum des Motors komprimiert. Die Kraftstoffversorgung des Motors erfolgt durch ein Einspritzsystem, das den Kraftstoff aus einem Tank (10) über eine Niederdruckstufe (11) und eine Hochdruckstufe (12) in das System von Einspritzdüsen (13) fördert. Alternativ zu diesem Einspritzsystem ist auch ein System mehrerer, paarweiser Kombinationen von Pumpe und Düse bekannt. Jeder einzelne Zylinder wird durch ein solches Paar mit Kraftstoff versorgt. Das Abgas des Dieselmotors gelangt nach der Entspannung hinter dem Turbolader in einen motornahen (7) und über ein Abgasrohr (8) weiter in einen Unterbodenkatalysator (9) und dann über das Auspuffrohr in die Umgebungsluft. Im Rahmen der vorliegenden Erfindung wurde ein System zur Abgasentstickung eines solchen Motors entwickelt, das zusätzlich zu diesen Motorkomponenten installiert wird und sich der vorhandenen Motorkomponenten bedient. Einer der Vorteile einer solchen modularen Aufrüstung ist offensichtlich: Bereits existierende Fahrzeuge können mit einem solchen System nachgerüstet und ihr Emissionsverhalten damit nachträglich deutlich verbessert werden.

Erfindungsgemäß erfolgt der Betrieb des Fahrzeugs vorzugsweise mit drei Katalysatoren. Zunächst wird der für die NOₓ-Reduktion zur Verfügung gestellte Dieselkraftstoff in einem Konverter partiell zu Maleinsäureanhydrid (MSA) oxidiert. Der MSA-haltige Produktstrom wird mit dem Hauptabgasstrom vereinigt und die Stickoxide an einem DENOX-Katalysator mit MSA zu Stickstoff, Kohlendioxid und Wasser umgesetzt. MSA-Reste werden in einem dritten edelmetallhaltigen Katalysator mit überschüssigem Sauerstoff zu CO₂ und H₂O oxidiert.

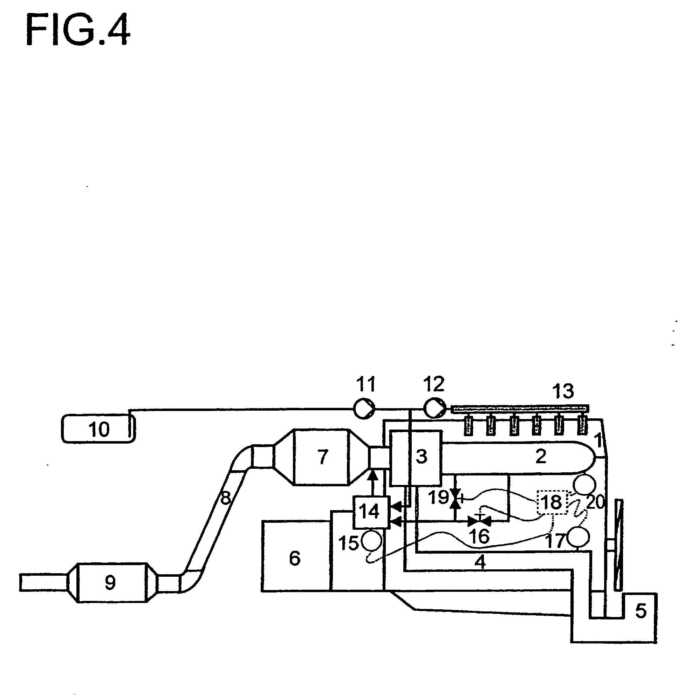

Die technische Ausführung erfolgt vorzugsweise durch geregelte Drosselung des Abgasstromes (Fig. 2) bzw. des Zuluftstromes (Fig. 3) bzw. eines regelbaren Gemisches aus beiden Gasen (Fig. 4) in einen Konverter (Fig. 2-4: 14). In jedem Fall ist dieser Teilgasstrom sauerstoffhaltig und wird für die Partialoxidation des Kraftstoffes genutzt.

Die Regelung des Gasstromes durch die Drosselventile (16, 20) erfolgt dabei durch die Motorelektronik (18) unter Zuhilfenahme des betreffenden Gasdrucks (17, 21) als Meßgröße. Die Menge des zugeführten Teilgases wird so bemessen, daß die Konzentration an Dieselkraftstoff in der Gasphase im Innern des Konverters konstant ist. Indirektes Kriterium dafür ist die Konvertertemperatur (15), die sich bei Vollumsatz des Diesels zu MSA aus der Reaktionswärme und der Wärmekapazität des Teilgases ergibt. Die Konvertertemperatur wird konstant auf 400°C geregelt. Bei dieser Temperatur ist die Ausbeute an MSA maximal . Auch die Hitzebelastung der Umgebung im Motorraum ist gegenüber vergleichbaren Konvertern deutlich vermindert.

Der Aufbau des Konverters ist in Figur 5 dargestellt. Dieselkraftstoff wird dem motoreigenen Kraftstoffeinspritzsystem über eine by-pass-Leitung (Fig. 2-4: 19) bevorzugt auf dessen Niederdruckseite entnommen und flüssig in eine Verdampferröhre im Konverter (Fig. 5, 1-2) dosiert. Die Verdampferröhre besteht aus einer zylindrischen Aussparung im Innern eines bevorzugt als Wabenkörper ausgelegten Katalysators für die Partialoxidation des Kraftstoffes (3). Durch Übergang der Reaktionswärme aus diesem Katalysator in die Verdampferröhre wird der Kraftstoff verdampft und vermischt sich im Konverter mit dem parallel zugeführten Teilgasstrom (4). Vorteil der Zugabe im Konverter ist die Verdampfung des Kraftstoffes mit Hilfe der Reaktionswärme der Partialoxidation. Dadurch läßt sich eine deutlich homogenere Verteilung des Kraftstoffs im Teilgas als bei Zugabe vor dem Konverter und damit eine optimierte Ausbeute an Oxygenat erreichen.

Am Ende der Verdampferröhre wird der den Kraftstoff enthaltende Gasstrom durch eine aufgesetzte Kappe (5) in den äußeren Teil des Katalysators (3) umgelenkt. An dieser Stelle wird der Kraftstoff mit Hilfe geeigneter Aktivmassen zu Oxygenaten, bevorzugt zu Carbonsäuren oder ihren Anhydriden, besonders bevorzugt zu MSA oder Maleinsäure, partiell oxidiert. Am gegenüberliegenden Ausgang (6) wird der Gastrom erneut umgelenkt und gerät in das Volumen (7) zwischen Konvertergehäuse (8) und Katalysator. Von dort wird er in den Abgasstrang des Fahrzeugs geleitet (9).

Der Einspritzdüse gegenüberliegend ist in der Verdampferröhre ein Heizelement (10), bevorzugt eine Glühkerze angeordnet. Das Heizelement wird durch die Bordstromversorgung des Fahrzeugs, in der Regel einer Autobatterie, gespeist und dient dem Start der Partialoxidation bei Start des Fahrzeugs: Einerseits wird die Aktivmasse so auf die notwendige Betriebstemperatur aufgeheizt,daß ein autothermer Betrieb möglich wird. Andererseits dient das Heizelement anfänglich zur Verdampfung des eingespritzten Kraftstoffes. Um den Eingangsstutzen des Heizelementes herum ist eine Feder (11) angeordnet, mit deren Hilfe die Anordnung aus Katalysator und Umlenkkappe gegen eine Dichtung (12) gepreßt wird, um den Verlauf der Gasströme in der vorbeschriebenen Weise zu gewährleisten.

Zur konstanten Regelung der Konvertertemperatur wird das Verhältnis aus Gastrom und dosierter Kraftstoffmenge konstant gehalten. Die Konvertertemperatur wird durch ein Thermoelement (13) gemessen, das im Innern des Partialoxidationskatalysators eingesteckt ist. Sie ergibt sich physikalisch aus dem Verhältnis der nahezu konstanten Wärmekapazität des Teilgasstromes und der ebenfalls konstanten Reaktionswärme. Ist deren Verhältnis konstant, so ist auch die Temperatur im Innern des Konverters stationär. Bei einer Konvertertemperatur von 400°C und vollständigen Umsatz des Dieselkraftstoffs wird eine maximale Ausbeute an MSA erzielt. Bei dieser Temperatur ist die Wärmebelastung benachbarter Bauteile des Motors gegenüber dem Betrieb bei höheren Temperaturen deutlich reduziert. Aufwendige Abschirmungen des Konverters können daher entfallen.

Der MSA-haltige Produktstrom des Konverters wird vor dem motornahen Katalysator mit dem Hauptabgasstrom vereinigt und gemeinsam mit diesem über den motornahen Katalysator geleitet. Dieser Katalysator enthält bei herkömmlichen Systemen edelmetall- oder übergangsmetallbasierte Aktivmassen. Die betreffenden Katalysatoren werden durch eine Beschlickerung keramischer oder metallischer Wabenkörper mit oxidischen washcoates, gefolgt von Trocknung und Kalzination und nachfolgender Edel- bzw. Übergangsmetallsalztränkung, wiederum gefolgt von Trocknung und Kalzination hergestellt.

Bei dem motornahen Katalysator für das hier beschriebene erfindungsgemäße Entstickungsverfahren kann auf derart aufwendige Katalysatorsysteme verzichtet werden. Stattdessen wird vorzugsweise ein Wabenkörper verwendet, auf den durch Beschlickerung und anschließende Trocknung und Kalzination ein wash-coat aus γ-Al₂O₃ aufgetragen ist. Vorteilhafterweise verwendet man sogar eine aus γ-Al₂O₃ extrudierte Vollwabe, so daß sich die Anzahl der Fertigungsschritte nochmals reduziert. Für die effiziente Reduktion von NOₓ mit MSA ist γ-Al₂O₃ als Aktivmasse ausreichend. Dem motornahen Katalysator nachgeschaltet wird ein edelmetallhaltiger Unterbodenkatalysator, wie er schon in herkömmlichen Systemen zum Einsatz kommt. Dieser Katalysator oxidiert CO und flüchtige organische Komponenten, die andernfalls in die Umwelt gelangen würden, zu CO₂ und H₂O.

Figur 6 stellt den NOₓ-Abbau mit Diesel an zwei herkömmlichen DENOX-Katalysatoren auf der Basis von platin- bzw. kupferdotiertem γ-Al₂O₃ (A, B) einen Abbau mit Diesel an γ-Al₂O₃ (C) und einem Abbau mit MSA an Al₂O₃ (D) gegenüber. Die Testbedingungen wurden mit einer Gasbelastung von 20.000 h⁻¹, einer NOₓ-Konzentration von 1000 ppm und der vierfachen Menge an C-Atomäquivalenten als Reduktionsmittel einheitlich gewählt. Die beiden genannten Systeme zeigen in dem für die Diesel-Abgasentstickung relevanten Temperaturbereich 200-400°C (Fig. 7, schattierter Bereich) NOₓ-Abbau, der jedoch bedingt durch mangelnde Aktivität bei niedrigen Temperaturen und mangelnder Selektivität bei hohen Temperaturen abklingt. Der maximale NOₓ-Abbau ist mit 25-30 % vergleichsweise gering und reicht nicht aus, zukünftige Emissionsgrenzwerte einzuhalten.

Deutlich höhere NOₓ-Abbauwerte erzielt man durch Verwendung von verbrennungsinaktivem γ-Al₂O₃ (C). Mit Dieselkraftstoff lassen sich hier Abbauwerte bis 40 % erreichen. Dafür sind jedoch hohe Reaktionstemperaturen bis 500°C erforderlich, um den Diesel-Kraftstoff katalytisch aktivieren zu können. Aus diesem Grund liegt der NOₓ-Abbau im relevanten Temperaturfenster nur unter 25 %. Durch die der NOₓ-Reduktion an γ-Al₂O₃ vorgeschaltete, partielle Oxidation des Dieselkraftstoffes zu MSA verbessert sich dieser Abbauwert bis auf 47 % bereits bei 400°C (D). Er liegt damit deutlich über den Werten, die an Platin- bzw. Cu-dotierten Katalysatoren bei 200-400°C gefunden wurden.

## Patentansprüche

1. Verfahren zur katalytischen Umwandlung von Kraftstoff für die Entfernung von Stickoxiden aus Abgasen von Verbrennungskraftmaschinen, bei dem Kraftstoff und ein Teilstrom des Abgases oder der Zuluft in einem Konverter umgewandelt werden, der Kraftstoff und der Teilstrom des Abgases oder der Zuluft voneinander getrennt in den Konverter geführt werden und der Kraftstoff im Konverter verdampft wird, **dadurch gekennzeichnet, daß** die Konvertertemperatur konstant ist und zur konstanten Regelung der Konvertertemperatur das Verhältnis aus Gasstrom und dosierter Kraftstoffmenge konstant gehalten wird.

2. Verfahren nach Anspruch 1, **dadurch gekennzeichnet, daß** der Kraftstoff dehydriert oder teiloxidiert wird.

3. Verfahren nach Anspruch 1 oder 2, **dadurch gekennzeichnet, daß** der Kraftstoff zumindest teilweise zu Carbonsäuren und/oder Carbonsäureanhydriden teiloxidiert wird.

4. Verfahren zur Entfernung von Stickoxiden aus Abgasen von Verbrennungskraftmaschinen, **dadurch gekennzeichnet, daß** zunächst ein Verfahren gemäß einem der Ansprüche 1 bis 3 durchgeführt wird, der Produktstrom aus dem Konverter mit dem Abgas der Verbrennungskraftmaschine vereinigt und an einem Katalysator zum Abbau der Stickoxide umgesetzt wird.

5. Verfahren nach Anspruch 4, **dadurch gekennzeichnet, daß** die Umsetzung zum Abbau der Stickoxide an einem Katalysator durchgeführt wird, dessen Aktivmasse kein Cr, Mn, Fe, Co, Ni, Ru, Rh, Pd, Ir, Pt, Cu enthält.

6. Verfahren nach Anspruch 5, **dadurch gekennzeichnet, daß** der Katalysator zum Abbau der Stickoxide mindestens ein Oxid eines Metalls der 1. bis 4. Hauptgruppe des Periodensystems der Elemente enthält.

7. Verfahren nach Anspruch 6, **dadurch gekennzeichnet, daß** der Katalysator zum Abbau der Stickoxide γ-Al₂O₃ enthält.

8. Verfahren nach einem der Ansprüche 4 bis 7, **dadurch gekennzeichnet, daß** der nach der Umsetzung am Katalysator zum Abbau der Stickoxide erhaltene Produktstrom an einem edelmetallhaltigen Katalysator zur Oxidation von verbliebenen organischen Verbindungen weiter umgesetzt wird.

9. Konverter zur katalytischen Umwandlung von Kraftstoff (8), mit einem Verdampfungsraum und einem damit verbundenen Umwandlungsraum, wobei der Verdampfungsraum getrennte Zuführungen für Abgas oder Zuluft (4) und Kraftstoff (1) aufweist, der Umwandlungsraum einen Katalysator zur katalytischen Umwandlung von Kraftstoff aufweist und der Verdampfungsraum und der Umwandlungsraum so miteinander verbunden sind, daß ein Wärmetransport vom Umwandlungsraum in den Verdampfungsraum möglich ist.

10. Verwendung eines Konverters gemäß Anspruch 9 in einem Verfahren gemäß einem der Ansprüche 1 bis 8.

## Claims

1. A process for the catalytic conversion of fuel for removing oxides of nitrogen from exhaust gases of internal combustion engines, in which fuel and a part-stream of the exhaust gas or of the intake air are converted in a converter, the fuel and the part-stream of the exhaust gas or of the intake air are fed separately from one another into the converter and the fuel is vaporized in the converter, wherein the converter temperature is constant, and for constant control of the converter temperature, the ratio of gas stream and metered amount of fuel is kept constant.

2. The process according to claim 1, wherein the fuel is dehydrogenated or partially oxidized.

3. The process according to claim 1 or 2, wherein the fuel is at least partially oxidized to carboxylic acids and/or carboxylic anhydrides.

4. A process for removing oxides of nitrogen from exhaust gases of internal combustion engines, wherein first a process according to any of claims 1 to 3 is carried out, and the product stream from the converter is combined with the exhaust gas of the internal combustion engine and is reacted over a catalyst for the degradation of the oxides of nitrogen.

5. The process according to claim 4, wherein the reaction for the degradation of the oxides of nitrogen is carried out over a catalyst whose active material comprises no Cr, Mn, Fe, Co, Ni, Ru, Rh, Pd, Ir, Pt or Cu.

6. The process according to claim 5, wherein the catalyst for the degradation of the oxides of nitrogen comprises at least one oxide of a metal of the first to fourth main group of the Periodic Table of the Elements.

7. The process according to claim 6, wherein the catalyst for the degradation of the oxides of nitrogen comprises γ-Al₂O₃.

8. The process according to any of claims 4 to 7, wherein the product stream obtained after the reaction over the catalyst for the degradation of the oxides of nitrogen is further reacted over a noble metal-containing catalyst for the oxidation of the remaining organic compounds.

9. A converter fur the catalytic conversion of fuel (8), comprising a vaporization space and a conversion space connected thereto, the vaporization space having separate feeds for exhaust gas or intake air (4) and fuel (1), the conversion space having a catalyst for the catalytic conversion of fuel and the vaporization space and the conversion space being connected to one another so that heat transport from the conversion space into the vaporization space is possible.

10. The use of a converter according to claim 9 in a process according to any of claims 1 to 8.

## Revendications

1. Procédé de conversion catalytique de carburant pour l'élimination d'oxydes d'azote dans les gaz d'échappement de machines à combustion interne, dans lequel du carburant et un courant partiel du gaz d'échappement ou de l'air d'apport sont convertis dans un convertisseur, le carburant et le courant partiel du gaz d'échappement ou de l'air d'apport sont guidés dans le convertisseur de manière mutuellement séparée et le carburant est évaporé dans le convertisseur, **caractérisé en ce que** la température de convertisseur est constante et le rapport entre le courant gazeux et la quantité dosée de carburant est maintenu constant pour le réglage constant de la température de convertisseur.

2. Procédé suivant la revendication 1, **caractérisé en ce que** le carburant est déshydrogéné ou partiellement oxydé.

3. Procédé suivant la revendication 1 ou 2, **caractérisé en ce que** le carburant est au moins partiellement oxydé en acides carboxyliques et/ou anhydrides carboxyliques.

4. Procédé d'élimination d'oxydes d'azote dans les gaz d'échappement de machines à combustion interne, **caractérisé en ce qu'**un procédé suivant l'une des revendications 1 à 3 est tout d'abord effectué, le courant de produit provenant du convertisseur est réuni au gaz d'échappement de la machine à combustion interne et il est amené à réagir sur un catalyseur pour la dégradation des oxydes d'azote.

5. Procédé suivant la revendication 4, **caractérisé en ce que** la réaction de dégradation des oxydes d'azote est effectuée sur un catalyseur dont la masse active ne contient pas de Cr, Mn, Fe, Co, Ni, Ru, Rh, Pd, Ir, Pt, Cu.

6. Procédé suivant la revendication 5, **caractérisé en ce que** le catalyseur prévu pour la dégradation des oxydes d'azote contient au moins un oxyde d'un métal des groupes principaux 1 à 4 du système périodique des éléments.

7. Procédé suivant la revendication 6, **caractérisé en ce que** le catalyseur de dégradation des oxydes d'azote contient du γ-Al₂O₃.

8. Procédé suivant l'une des revendications 4 à 7, **caractérisé en ce que** le courant de produit obtenu après la réaction sur le catalyseur pour la dégradation des oxydes d'azote est amené en outre à réagir sur un catalyseur contenant du métal noble en vue de l'oxydation des composés organiques subsistants.

9. Convertisseur pour la conversion catalytique de carburant (8), comprenant une chambre d'évaporation et une chambre de conversion qui lui est reliée, dans lequel la chambre d'évaporation présente des amenées séparées pour le gaz d'échappement ou l'air d'apport (4) et le carburant (1), la chambre de conversion présente un catalyseur pour la conversion catalytique du carburant et la chambre d'évaporation et la chambre de conversion sont mutuellement reliées de façon qu'un transport de chaleur depuis la chambre de conversion dans la chambre d'évaporation soit possible.

10. Utilisation d'un convertisseur suivant la revendication 9, dans un procédé suivant l'une des revendications 1 à 8.
